Europäisches Patentamt

European Patent Office

Office européen des brevets

(11) Publication number: **0 298 602**
**A1**

# EUROPEAN PATENT APPLICATION

(21) Application number: 88305162.5

(22) Date of filing: 07.06.88

(51) Int. Cl.4: **G02F 1/137**

(30) Priority: 09.06.87 JP 142367/87
30.04.88 JP 105475/87

(43) Date of publication of application:
**11.01.89 Bulletin 89/02**

(84) Designated Contracting States:
**DE FR GB**

(71) Applicant: **MITSUBISHI KASEI CORPORATION**
**5-2, Marunouchi 2-chome Chiyoda-ku**
**Tokyo(JP)**

(72) Inventor: **Kaneko, Masaharu**
**14-22, Minamirinkan 7-chome**
**Yamato-shi Kanagawa-ken(JP)**

(74) Representative: **Allam, Peter Clerk et al**
**LLOYD WISE, TREGEAR & CO. Norman**
**House 105-109 Strand**
**London WC2R 0AE(GB)**

(54) **Electro-optic device using ferroelectric liquid crystal.**

(57) An electro-optic device is disclosed which includes a dichroic dye-containing, ferro-electric liquid crystal cell (10), a reflecting plate (30), and a retardation plate (20) such as a quarter wave plate disposed therebetween, so that an incident light (x) entering the cell (10) is transformed into a linearly polarized light whose oscillation direction may be switched by changing the polarity of the electric field applied to the cell. The light is reflected by the reflecting plate (30) after passage through the retardation plate (20) and then introduced again into the cell. The retardation plate (20) is arranged so as to permit the polarized light with one of the switched oscillation directions to pass therethrough as such but to cause the polarized light with the other oscillation direction into a circularly polarized light, whereby the device is in a bright state in the former case but is in a dark state in the latter case due to the reabsorption with the dye.

Fig. I

## Electro-Optic Device Using Ferroelectric Liquid Crystal

This invention relates to an electro-optic device using a ferroelectric liquid crystal material and useful for display applications.

The high response speed and bistability of a ferroelectric liquid crystal allow the application thereof to high density display devices. Birefringence (double refraction) mode and guest-host mode are typical display modes using a ferroelectric liquid crystal.

As well known, a ferroelectric liquid crystal suitable for use in birefringence mode type display devices is one whose tilt angle $\theta$ between the direction of the long molecular axis of the liquid crystal molecules and the direction of the alignment of the liquid crystal (the direction of the helical axis of the chiral smectic-C liquid crystal under the condition in which no volatage is applied to the liquid crystal) is 22.5$^\circ$. Such a liquid crystal is easily available in the market. One problem of known birefringence mode type display devices is concerned with a difficulty to precisely and uniformly control a cell gap which is generally as thin as 2 $\mu$m.

Conventional guest-host mode display device using a ferroelectric liquid crystal cell is of a type in which the direction of the axis of light absorption of the dichromic dye is switched by switching the polarity of the electric field applied to the cell so that a linearly polarized light from a polarizer is absorbed or not absorbed by the dye during its passage through the cell depending on the switched conditions, thereby to provide colored or colorless display. In this case, it is of course desirable that the angle through which the light absorption axis of the dye is switched be 90$^\circ$ in order to obtain the maximum contrast between the colored and colorless displays. Therefore, it is most desirable to use a liquid crystal whose tilt angle $\theta$ is 45$^\circ$.

While a display device of a guest-host mode type can use a cell with a greater thickness as compared with that of the birefringence mode type and does not require precise control of the cell gap, it involves a problem because a liquid crystal material having a tilt angle $\theta$ of 45$^\circ$ is hardly available in commerce and is extremely expensive.

The present invention has been made with the foregoing problem of the conventional guest-host mode type display device using a ferroelectric liquid crystal material in view and has as its object the provision of an electro-optic device which can give a high color contrast without using a liquid crystal material with a tilt angle $\theta$ of 45$^\circ$.

There is provided in accordance with the present invention an electro-optic device comprising:

a liquid crystal cell comprising a pair of transparent, electrode-bearing substrates between which a layer of a ferroelectric liquid crystal composition containing a dichroic dye is disposed, the direction of the axis of light absorption by said dichroic dye being switched upon switching the polarity of a voltage applied between said electrodes;

a retardation plate disposed in the direction of the light transmitted through said liquid crystal cell and arranged such that the optical axis thereof is oriented in parallel with or perpendicularly to one of the switched directions of the light absorption axis of said dye; and

reflecting means disposed adjacent to said retardation plate for reflecting a light transmitted through said retardation plate.

With an electro-optic device with the above-described construction, a beam of incident light having a wavelength specific to the dichroic dye (guest molecules) is absorbed by the guest molecules contained in the liquid crystal. The light absorption occurs in the direction parallel to the light absorption axis (the long or short molecular axis, ordinarily the long axis) of the guest molecules. Therefore, the incident light is transformed, during its passage through the cell, into a linearly polarized light (or partially polarized light) whose oscillation direction is perpendicular to the light absorption axis of the guest molecules. The light absorption axis of the dye may be switched between first and second directions in conformity with the alignment of the liquid crystal (host molecules) upon switching the polarity of the electric field applied to the liquid crystal cell between first and second conditions, respectively. The angle between the first and second directions is called herein "switching angle". In this case, the oscillation direction of the linearly polarized light transmitted from the liquid crystal cell is also switched upon switching the direction of the light absorption axis of the dye. Thus, the incident light entering the liquid crystal cell is transformed into a first, linearly polarized light when electric field applied to the cell is in the first condition or into a second, linearly polarized light when the cell is in the second condition, the angle between the oscillation directions of the first and second linearly polarized light being equal to the switching angle.

The polarized light from the liquid crystal cell then enters the retardation plate (phase shifter). The retardation plate is disposed such that the optical axis thereof is oriented in the direction parallel with or perpendicular to one of the switched directions of the light absorption axis (e.g. the first direction) of the dichroic dye. The retardation plate is also arranged so as (1) to create a retardation (phase difference) of $(2n + 1)\lambda/4$ (where n is zero or a positive integer and $\lambda$ is a wavelength of the incident light) between the ordinary ray and extraordinary ray of the linearly polarized light whose oscillation direction is perpendicular to the other switching direction (e.g. the second direction) of the light absorption axis and (2) to equalize the amplitudes of the ordinary and extraordinary rays with each other.

Therefore, the first linearly polarized light whose direction of the oscillation is parallel with or perpendicular to the optical axis of the retardation plate can pass through the retardation plate as such. On the other hand, the second, linearly polarized light, whose direction of the oscillation is such as to cause a retardation of $(2n + 1)\lambda/4$ between the ordinary ray and the extraordinary ray thereof and to equalize the amplitudes of the ordinary and extraordinary rays with each other, is transformed into a circularly polarized light upon passage through the retardation plate.

The light transmitted from the retardation plate is reflected by the reflecting means and again enters the retardation plate in the reverse direction. In this case, the first, linearly polarized light passes through the retardation plate as such and then through the liquid crystal cell without being reabsorbed by the dichroic dye, so that the electro-optic device is in a bright state. On the other hand, the circularly polarized light reflected from the reflecting means is transformed again, upon passage through the retardation plate, into a linearly polarized light whose oscillation direction is rotated through an angle of 90° with respect to that of the original polarized light entering the retardation plate from the liquid crystal cell, and then enters the liquid crystal cell again, where the light specific to the dichroic dye is reabsorbed by the dye. Thus, the electro-optic device is in a dark state.

The ferroelectric liquid crystal cell to be used in the present invention is obtained by charging a ferroelectric liquid crystal composition containing a liquid crystal material and a dichroic dye into a cell having a pair of transparent substrates each having a transparent electrode, followed by aligning the liquid crystal. A polyimide film may be provided over the transparent substrate, as desired. The ferroelectric liquid crystal material may be, for example, formed of an ester-type, a biphenyl-type or a pyrimidine-type. Both memory-type and non-memory-type liquid crystal cells may be used for the purpose of the present invention. It is preferred that the tilt angle $\theta$ of the liquid crystal (i. e. the tilt angle of the transition moment of light absorption) be about 22.5°. In this case, the switching angle of the direction of the light absorption axis becomes about 45°. Liquid crystal materials conventionally used in birefringent mode and having a tilt angle $\theta$ of about 22.5° may be suitably used for the purpose of the present invention. The dichroic dye may be, for example, an azo-type or an anthraquinone-type dye.

The retardation plate may be, for example, a Fresnel prism, a Mooney prism, birefringent inorganic material such as mica, calcite or gypsum, and an organic material such as a liquid crystal or polyvinyl alcohol. Both colorless and colored materials may be used. A quarter wave length plate may be suitably used.

It is preferred that the reflecting plate to be used in combination with the above-described retardation plate be electrically conductive and have a high reflectivity. Metals or alloy such as aluminum, silver, chromium, nickel, gold, copper, and stainless steel are preferred example of the material from which the reflecting surface of the reflecting plate is formed. Above all, the use of aluminum or silver is particularly preferred. Reflecting plates formed of organic polymeric materials such as plastics and inorganic salts and oxides such as calcium carbonate, zinc oxide, barium sulfate and titanium oxide have a tendency to change the polarization state of the reflecting light and are not suited for the purpose of the present invention.

The above-described metal or alloy may be used in the form of a sheet, film or powder. A reflecting surface formed of a film of the metal or alloy obtained by vacuum deposition, spattering or plating is preferable for reasons of a high reflectivity. A reflecting plate having a roughened reflecting surface is suitably used in the present invention since it gives an improved diffusion reflectance but a reduced mirror reflectance so that the whiteness and brightness of the display may be improved. Such a reflecting plate may be obtained by, for example, a method including the steps of processing a transparent, non-birefringent substrate such as a glass plate with diamond powder to form a finely rugged or roughened surface, and coating aluminium by spattering over the roughened surface so that resulting surface gives a mirror reflectance of 50 % or less based on the total reflectance. In this case, a retardation plate such as a quarter wave length plate may be used in lieu of the transparent substrate.

The thus constructed electro-optic device may be driven by any known way such as by applying a plus or minus pulse or square wave.

The present invention will now be described in more detail with reference to the accompanying drawings, in which:

Figs. 1 is a side elevational view diagrammatically showing an electro-optic device according to the present invention;

Figs. 2(a) and 3(a) are schematic cross-sectional views taken on the line II-II in Fig. 1 explanatory of the operational principle of the present invention; and

Figs. 2(b) and 3(b) show the oscillation directions of linearly polarized light entering and transmitted from a retardation plate, respectively.

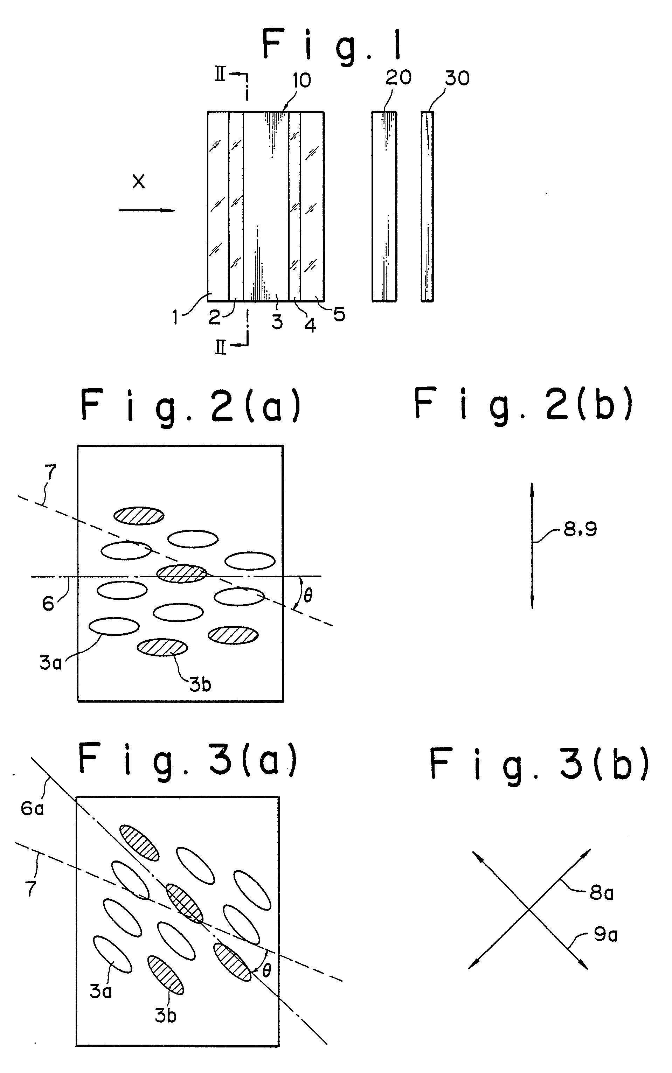

Referring first to Fig. 1, designated generally as 10 is a ferroelectric liquid crystal cell which comprises a pair of transparent substrates 1 and 5 having transparent electrodes 2 and 4, respectively, between which a layer 3 of a ferroelectric liquid crystal composition containing a dichroic dye is provided. The ferroelectric liquid crystal in this embodiment has a tilt angle $\theta$ of about $22°$. Disposed adjacent to the liquid crystal cell 10 are a quarter wave length plate 20 and a reflecting plate 30. The quarter wave plate 20 is disposed so that the optical axis thereof (fast axis or slow axis) is perpendicular to or in parallel with the long molecular axis of the dichroic dye in the cell 10 in one of the two, first and second switched conditions described hereinafter. An incident light enters the liquid crystal cell 10 in the direction shown by the arrow X.

Figs. 2(a) and 3(a) are schematic illustration of the aligned state of the ferroelectric liquid crystal molecules 3a and the dichroic dye molecules 3b in two different first and second switched conditions where voltages of opposite polarities are applied to the liquid crystal cell 10. In the first switched condition, as shown in Fig. 2(a), the direction 6 of the light absorption axis (long molecular axis in the illustrated case) of the dichroic dye 3b is aligned at an angle $\theta$ (about $22°$ in this embodiment) with respect to the direction 7 which is the alignment direction of the liquid crystal (the direction of the helical axis of the chiral smectic liquid crystal, i.e. the direction normal to the layer of the smectic liquid crystal, under electrically non-energized condition). In the second switched condition, as shown in Fig. 3(a), the direction 6a of the long molecular axis of the dichroic dye 3b is aligned at the same angle $\theta$ (about $22°$) in the inverted direction. Therefore, the angle between the directions 6 and 6a of the long molecular axes in the first and second switched conditions (switching angle) is $2\theta$ (about $45°$).

Now, the incident light entering the liquid crystal cell in the direction X (Fig. 1) and having a wavelength specific to the dichroic dye is absorbed by the dichroic dye, the light absorption occurring in the incident light whose oscillation vector is oriented in the direction parallel with the long molecular axis of the dichroic dye. Therefore, the light transmitted from the liquid cell 10 is transformed into a linearly polarized light (Figs. 2(b) and 3(b)) whose oscillation direction 8 (or 8a) is perpendicular to the direction 6 (or 6a) of the long molecular axis of the dichroic dye 3b. The linearly polarized light then enters the quater wave plate 20.

Assuming that the quater wave plate 20 is disposed such that its optical axis is perpendicular to or parallel with the long molecular axis 6 of the dichroic dye 3b maintained under the first switched condition as shown in Fig. 2(a), the linearly polarized light passes the quater wave plate 20 without being influenced by the plate 20 and strikes on the reflecting plate 30. The light reflected from the plate 30 enters again the quater wave plate 20. Since the light transmitted from the quater wave plate 20 has an oscillation direction 9 which is the same as that 8 of the light transmitted from the liquid crystal cell 10, as shown in Fig. 2(b), it passes through the liquid crystal cell 10 without being reabsorbed by the dichroic dye 3b, so that the electro-optic device is in a bright state.

When a reverse voltage is applied to the liquid cell 10, the linearly polarized light transmitted from the liquid cell 10 has an oscillation direction 8a which is rotated through an angle of $2\theta$ (about $45°$) with respect to the direction 8 as shown in Fig. 3a. Therefore, the light enters the quarter wave plate 20 with the angle between the oscillation direction 8a and the optical axis of the quarter wave plate 20 being about $45°$. As a result, the light transmitted from the quater wave plate 20 is a circularly polarized light. The light is than reflected from the reflecting plate 30 and enters again the quater wave plate 20 where it is transformed again into a linearly polarized light whose oscillation direction 9a is rotated through an angle of about $90°$ with respect to that 8a of the linearly polarized light transmitted from the liquid crystal cell 10 (Fig. 3(b)). Thus, the light transmitted from the quater wave plate 20 is absorbed again by the dichroic dye 3b during its passage through the liquid crystal cell 10, so that the liquid cell is in a dark state.

## Claims

1. An electro-optic device comprising:

a liquid crystal cell comprising a pair of transparent, electrode-bearing substrates between which a layer of a ferroelectric liquid crystal composition containing a dichroic dye is disposed, the direction of the axis of light absorption by said dichroic dye being switched between first and second directions upon switching the polarity of a voltage applied between said electrodes;

a retardation plate disposed in the direction of the light transmitted through said liquid crystal cell and arranged such that the optical axis thereof is oriented in parallel with or perpendicularly to said first direction; and

reflecting means disposed adjacent to said retardation plate for reflecting a light transmitted through said retardation plate.

2. An electro-optic device as set forth in claim 1, wherein the angle between said first and second directions through which the direction of the axis of light absorption is switched is about 45°.

3. An electro-optic device as set forth in claim 2, wherein said retardation plate is a quarter wave length plate.

4. An electro-optic device as set forth in claim 1, wherein said reflecting means has a reflecting surface formed of a metal.

5. An electro-optic device as set forth in claim 4, wherein said metal is silver or aluminum.

6. An electro-optic device as set forth in claim 5, wherein said reflecting surface is roughened so that the proportion of the mirror reflection light in the total reflecting light is 50 % or less.

# Fig. l

# Fig. 2(a)

# Fig. 2(b)

# Fig. 3(a)

# Fig. 3(b)

| | DOCUMENTS CONSIDERED TO BE RELEVANT | | EP 88305162.5 |
|---|---|---|---|
| Category | Citation of document with indication, where appropriate, of relevant passages | Relevant to claim | CLASSIFICATION OF THE APPLICATION (Int. Cl.4) |
| X | EP - A2 - 0 219 480 (LAGERWALL) | 1-3 | G 02 F 1/137 |
| Y | * Column 1, line 8 - column 3, line 56 * | 4-6 | |
| | -- | | |
| Y | DE - A1 - 2 933 312 (GENERAL ELEC-TRIC) | 4-6 | |
| | * Claims 1,4,5,8; page 14, line 12 - page 16, line 2 * | | |
| | -- | | |
| Y | DE - A1 - 3 148 447 (SHARP) | 4-6 | |
| | * Fig. 2; page 7, line 11 - page 10, line 14 * | | |
| | -- | | |
| A | EP - A2 - 0 091 637 (HITACHI) | 1 | |
| | * Abstract; page 9, line 4 - page 20, line 4; page 34, line 5 - page 41, line 21 * | | |
| | ---- | | TECHNICAL FIELDS SEARCHED (Int. Cl.4) |
| | | | G 02 F |
| | | | G 09 F |

The present search report has been drawn up for all claims

| Place of search | Date of completion of the search | Examiner |
|---|---|---|
| VIENNA | 30-09-1988 | GRONAU |